# EUROPEAN PATENT APPLICATION

(11) **EP 4 403 683 A1**
(43) Date of publication of application: **24.07.2024**
(21) Application number: 22870160.3
(22) Date of filing: 23.08.2022
(51) Int. Cl.: D02G 3/48, D01D 5/098, D01D 5/088, D01D 10/02, D01D 10/06, B60C 9/00

(54) **HIGH-ELASTICITY NYLON CORD AND METHOD FOR PRODUCING SAME**

(30) Priority: 17.09.2021 KR 20210124773
(71) Applicant: HYOSUNG ADVANCED MATERIALS CORPORATION, Seoul 04144 (KR)
(72) Inventor: CHOI, Jae Shin, Gunpo-si, Gyeonggi-do 15825 (KR); PARK, Jin Kyung, Yongin-si, Gyeonggi-do 16807 (KR); KIM, Cheol, Seongnam-si, Gyeonggi-do 13616 (KR)
(74) Representative: Westphal, Mussgnug & Partner Patentanwälte mbB
(86) International application number: PCT/KR2022/012552
(87) International publication number: WO 2023/043074

(57) **Abstract**

The present invention pertains to a high-elasticity nylon cord and a method for producing same. The purpose of the present invention is to produce a nylon cord having a high elastic modulus by reducing the moisture content of a raw cord through a drying process during the production of the nylon cord.

## Description

### Technical Field

The present application claims priority to Korean Patent Application No. 10-2021-0124773, filed September 17, 2021, the entire contents of which is incorporated herein for all purposes by this reference.

The present disclosure relates to a high-elasticity nylon cord and a method for producing the same.

### Background Art

Cap ply in a tire is the outermost reinforcing material excluding a tread, and runs around the circumference of the tire. The cap ply functions to restrict the size of the tire by exerting contractile force at high temperatures and prevent an increase in rolling resistance. The most widely used material for the cap ply is nylon 6,6, which is known to have high shrinkage.

Due to the nature of nylon, its physical properties vary greatly depending on whether or not it absorbs moisture. When the moisture content is high, produced fiber shrinks, causing a decrease in elastic modulus.

Conventionally, in an effort to solve the above problem, attempts have been made to improve the elastic modulus of nylon cord by increasing the draw ratio, which is a factor in the yarn production process, or by applying high temperature and stretch at the cord production step. However, increasing the draw ratio during the production of the nylon cord is closely related to the yarn breakage rate and increases the occurrence of yarn breakages, resulting in a problem of lowering processability. In addition, high temperatures (specifically, over 250°C) and stretching during the cord production step cause the cord to become hard, lowering fatigue resistance.

Accordingly, there is a demand for the development of technology to produce a nylon tire cord with improved elastic modulus.

### Disclosure

### Technical Problem

Accordingly, the present disclosure has been made keeping in mind the above problems occurring in the related art, and an objective of the present disclosure is to provide a nylon cord and a method for producing the same that can secure a high elastic modulus when producing a tire cord using nylon, which is sensitive to moisture absorption.

### Technical Solution

In order to accomplish the above objective, according to one aspect of the present disclosure, there is provided a nylon cord, which has a load at 2% elongation (LASE 2%) of equal to or greater than 0.6 g/d, a load at 4% elongation (LASE 4%) of equal to or greater than 1.0 g/d, and a shrinkage rate of equal to or less than 6%, in which the shrinkage rate is measured under a primary load of 0.05 g/d at 177°C for 2 minutes.

As a specific example, the nylon cord may have a load at 2% elongation (LASE 2%) of 0.6 to 1.2 g/d and a load at 4% elongation (LASE 4%) of 1.0 to 2.0 g/d.

In addition, the nylon cord may have a moisture content of 0.5% to 3.5% on the basis of the entire raw cord before dipping in a dipping solution.

According to another aspect of the present disclosure, there is provided a method for producing a nylon cord, the method including: producing an undrawn yarn by melt-spinning and cooling a polyamide polymer prepared by condensation polymerization of hexamethylenediamine and adipic acid; producing a nylon yarn by multistep drawing the undrawn yarn by passing the undrawn yarn through n godet rollers (n=3 or more) and winding the undrawn yarn; producing a raw cord by primarily and secondarily twisting the nylon yarn at 100 to 550 TPM (twist per meter); drying the raw cord; and producing a dip cord by dipping the dried raw cord in a dipping solution and then drying and heat-treating the raw cord.

As a specific example, the drying of the raw cord may be performed by drying the raw cord at a temperature of equal to or greater than 150°C for equal to or greater than 100 seconds, and the drying of the raw cord may be performed at 150°C to 240°C for 100 to 300 seconds.

Meanwhile, the dried raw cord may have a moisture content of 0.5% to 3.5%.

### Advantageous Effects

A nylon cord and a method for producing the same according to the embodiment of the present disclosure can improve the elastic modulus of a final produced tire cord by controlling the moisture content of a raw cord through a process of drying a raw nylon cord.

### Best Mode

The present disclosure provides a nylon cord, which has a load at 2% elongation (LASE 2%) of equal to or greater than 0.6 g/d, a load at 4% elongation (LASE 4%) of equal to or greater than 1.0 g/d, and a shrinkage rate of equal to or less than 6%, in which the shrinkage rate is measured under a primary load of 0.05 g/d at 177°C for 2 minutes.

The present disclosure provides a method for producing a nylon cord, the method including: producing an undrawn yarn by melt-spinning and cooling a polyamide polymer prepared by condensation polymerization of hexamethylenediamine and adipic acid; producing a nylon yarn by multistep drawing the undrawn yarn by passing the undrawn yarn through n godet rollers (n=3 or more) and winding the undrawn yarn; producing a raw cord by primarily and secondarily twisting the nylon yarn at 100 to 550 TPM; drying the raw cord; and producing a dip cord by dipping the dried raw cord in a dipping solution and then drying and heat-treating the raw cord. The drying of the raw cord is performed by drying the raw cord at a temperature of equal to or greater than 150°C for equal to or greater than 100 seconds.

### Mode for Invention

Reference will now be made in detail to various embodiments of the present disclosure, specific examples of which are illustrated in the accompanying drawings and described below, since the embodiments of the present disclosure can be variously modified in many different forms. While the present disclosure will be described in conjunction with exemplary embodiments thereof, it is to be understood that the present disclosure is not limited to the specific exemplary embodiments, but includes all modifications, equivalents, and substitutions included in the spirit and the scope of the present disclosure.

It will be further understood that the terms "comprises" or "have" used in this specification, specify the presence of stated features, processes, operations, components, parts, or a combination thereof, but do not preclude the presence or addition of one or more other features, numerals, processes, operations, components, parts, or a combination thereof. Further, an expression that an element such as a layer, region, substrate or plate is placed "on" or "above" another element indicates not only a case where the element is placed "directly on" or "just above" the other element but also a case where a further element is interposed between the element and the other element. On the contrary, an expression that an element such as a layer, region, substrate or plate is placed "beneath" or "below" another element indicates not only a case where the element is placed "directly beneath" or "just below" the other element but also a case where a further element is interposed between the element and the other element. In addition, an expression that an element is placed "on" another element may indicate not only a case where the element is placed on the top of the other element but also a case where the element is placed on the bottom of the other element.

The present disclosure relates to a high-elasticity nylon tire cord, which has a load at 2% elongation (LASE 2%) of equal to or greater than 0.6 g/d, a load at 4% elongation (LASE 4%) of equal to or greater than 1.0 g/d, and a shrinkage rate of equal to or less than 6%, in which the shrinkage rate is measured under a primary load of 0.05 g/d at 177°C for 2 minutes.

In addition, a method for producing a nylon cord according to an embodiment of the present disclosure may include producing an undrawn yarn by melt-spinning and cooling a polyamide polymer prepared by condensation polymerization of hexamethylenediamine and adipic acid, producing a nylon yarn by multistep drawing the undrawn yarn by passing the undrawn yarn through n godet rollers (n=3 or more) and winding the undrawn yarn, producing a raw cord by primarily and secondarily twisting the nylon yarn at 100 to 550 TPM, drying the raw cord, and producing a dip cord by dipping the dried raw cord in a dipping solution and then drying and heat-treating the raw cord.

The polyamide polymer is preferably polyamide 66 (nylon 66) .

Specifically, the present disclosure is characterized by improving the elastic modulus of a final produced cord (dip cord) by controlling the moisture content of the raw cord to a low level through the step of drying the nylon raw cord.

First, the polyamide polymer used in the present disclosure will be described.

The polyamide used for producing the cord according to the present disclosure contains a highly polar amide group in a main chain, and is a crystalline polymer having tacticity and symmetry. In general, polyamide refers to the general term for polymers linked by amide bonds (-CONH-), and is obtained by condensation polymerization of diamine and divalent acid. The characteristics of polyamide vary depending on the amide bonds in the molecule, and the physical properties change differently depending on the ratio of amide groups. For example, as the ratio of amide groups in the molecule increases, specific gravity, melting point, water absorption, and rigidity increase.

In addition, polyamide is a material used in a wide range of fields such as clothing, tire cords, carpets, ropes, computer ribbons, parachutes, plastics, and adhesives due to its excellent corrosion resistance, abrasion resistance, chemical resistance, and insulation properties,

In general, polyamides are divided into aromatic polyamides and aliphatic polyamides, and a representative aliphatic polyamide is nylon. Nylon was originally a brand name of DuPont in the U.S., but is now used as a generic name.

Nylon is a hygroscopic polymer and is sensitively to temperature. Representative nylons include nylon 6, nylon 66, and nylon 46.

In the present disclosure, nylon 66 (polyamide 66) is used.

Nylon 66 is produced through dehydration condensation polymerization of hexamethylenediamine and adipic acid, and is also called polyhexamethylene adipamide.

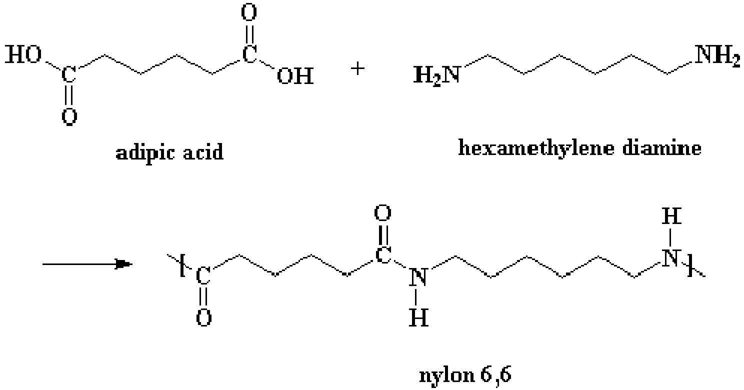

In the present disclosure, in order to produce a tire cord using nylon 66, a polyamide polymer prepared by condensation polymerization of hexamethylenediamine and adipic acid is first used.

Specifically, a polyhexamethylene adipamide polymer contains at least 85 mol% of hexamethylene adipamide repeating units, and is preferably composed only of hexamethylene adipamide units.

Optionally, any polyamide homopolymer and copolymer may be used instead of the polyhexamethylene adipamide. As the polyamide polymer, widely used aliphatic nylon polymers such as poly(hexamethylene adipamide) (nylon 66); poly(e-caproamide) (nylon 6); and copolymers thereof may be used, but it is most preferable to use nylon 66. In addition, other nylon polymers that can be advantageously used include nylon 12, nylon 46, nylon 610, and nylon 612.

A polyhexamethylene adipamide chip may be added in an amount such that the residual amount of copper metal in a final polymer is 50 to 80 ppm to improve thermal stability. When the residual amount is less than 50 ppm, thermal stability decreases during spinning and thermal decomposition occurs, and when the residual amount exceeds 80 ppm, excess copper metal acts as a foreign substance and causes problems during spinning.

Thereafter, the polyhexamethylene adipamide chip is melt-spun through a spinning pack and a nozzle by low-temperature melt spinning, preferably at a spinning temperature of 270°C to 310°C, and preferably at a spinning draft ratio of 20 to 200 (linear speed on an initial winding roller/linear speed at a nozzle) . With this process, it is possible to prevent a decrease in the viscosity of the polymer due to thermal decomposition. When the spinning draft ratio is less than 20, the cross-sectional uniformity of filaments deteriorates, significantly reducing drawing workability, and when the spinning draft ratio exceeds 200, filament breakage occurs during spinning, making it difficult to produce a normal yarn.

In addition, an L/D (length/diameter) value of an extruder screw in a spinneret is preferably 2.0 to 6.0. Here, when the L/D value of the screw is less than 2.0, the denier and the cross-sectional variation rate of monofilaments increase, resulting in a decrease in the strength and the utilization rate of fiber, and when the L/D value exceeds 6.0, the pressure of the pack pressure increases, resulting in low processibility.

Thereafter, a melt-spun discharged yarn is rapidly cooled and solidified by passing it through a cooling zone. In the cooling zone, depending on the method of blowing cooling air, open quenching, circular closed quenching, and radial outflow quenching methods may be applied, and the open quenching method is preferred. Thereafter, the discharged yarn which is solidified while passing through the cooling zone may be oiled with 0.5% to 1.0% of an oil by an oil application device in which an oil that has excellent drawability and thermal efficiency and reduces the coefficient of friction between single yarns is used. Through the above method, an undrawn yarn is produced.

Thereafter, a nylon yarn is produced by multistep drawing the undrawn yarn by passing it through n godet rollers (n=3 or more) and winding the undrawn yarn. Here, it is preferable to use five godet rollers.

Specifically, a thread that has passed through a first godet roller is drawn by a spin draw method by passing through second to fifth godet rollers at a total draw ratio of equal to or greater than 4.0, preferably 4.5 to 6.2, and more preferably 4.8 to 6.0, thereby obtaining a final drawn yarn. When the draw ratio is less than 4.0, the strength of the yarn and cord may decrease, and when the draw ratio exceeds 6.2, the drawing workability and productivity may decrease and the strength utilization rate of the yarn may decrease, which is not desirable.

Here, it is preferable that the temperature of the first godet roller is room temperature, the temperature of the second godet roller is room temperature to 90°C, the temperature of the third godet roller is 120°C to 230°C, the temperature of the fourth godet roller is 180°C to 250°C, and the temperature of the fifth godet roller is room temperature to 150°C.

In addition, the drawing speed (spinning speed) of the first godet roller may be equal to or greater than 550 m/min, and preferably 550 to 900 m/min. The drawing speed (winding speed) of an n-1th godet roller, preferably the fourth godet roller, may be equal to or greater than 3,000 m/min, and preferably 3,000 to 4,000 m/min. In this case, the total draw ratio, which is defined as the speed of the fourth godet roller/the speed of the first godet roller, may be 4.8 to 6.4.

Meanwhile, in the multistep drawing and winding step, a relax ratio of equal to or less than 12% may be applied to the yarn. Here, the relax ratio may be the drawing speed of an n-1th godet roller/the drawing speed of an nth godet roller, preferably the speed of the fourth godet roller/the speed of the fifth godet roller.

Then, a nylon raw cord is produced by twisting each of two obtained nylon yarns and plying them together. Specifically, the nylon raw cord is produced by primarily twisting each of the two nylon yarns at a twist number of 100 to 550 TPM to form primarily twisted yarns, and plying the primarily twisted yarns and secondarily twisting them at a twist number of 100 to 550 TPM.

In general, when the twist number is high, strength tend to decrease, while intermediate elongation (elongation at specific load) and breaking elongation (elongation at break) tend to increase. In addition, fatigue resistance tends to improve as the twist number increases. The twist number of the nylon cord produced in the present disclosure was 100 to 550 TPM (twist per meter) for both primary twisting and secondary twisting. The twist number is preferably 200 to 500 TPM, more preferably 300 to 440 TPM. Here, when the twist number is less than 100/100 TPM, the fatigue resistance of the raw cord tends to decrease due to a decrease in the breaking elongation of the raw cord, and when the twist number exceeds 550/550 TPM, the strength of the raw cord decreases greatly, making it unsuitable for use as tire cords.

Thereafter, the nylon raw cord is dried before being immersed in the dipping solution.

In the present disclosure, the elastic modulus of a final produced nylon cord can be improved by performing the step of drying the raw cord.

Specifically, in the past, when producing a nylon cord, a raw cord was immersed in a dipping solution without undergoing a drying process to produce a dip cord. However, as described above, since nylon has a significant change in physical properties according to moisture absorption due to its nature, when the moisture content is high, fiber shrinkage occurs and the elastic modulus decreases. In an effort to overcome the above problem, there has been proposed a method of using nylon with a high moisture content while increasing the draw ratio when producing a yarn to increase the elastic modulus. However, this led to problems of increased end breakages, poor processability, and poor quality. In addition, there has been an attempt to perform stretching at a temperature higher than 250°C when producing a cord. In this case, although it was possible to increase the elastic modulus, there was a problem of reduced fatigue resistance, making it unsuitable for use as cords.

The inventors of the present disclosure have recognized the problems associated with the conventional method for increasing the elastic modulus of the nylon cord. After conducting in-depth research, they have found that when the moisture content in the nylon raw cord is lowered by adding the process of drying the nylon raw cord, the elastic modulus can be increased while maintaining the same level of tensile properties as conventional ones.

Accordingly, the present disclosure is characterized by drying the nylon raw cord before immersing it in the dipping solution. Specifically, during drying, heat treatment is performed for equal to or greater than 100 seconds at a temperature of equal to or greater than 150°C. The drying conditions are as follows: the drying temperature is preferably set to 150°C to 240°C, more preferably 170°C to 240°C; and the drying time is preferably maintained at 100 to 300 seconds, more preferably 130 to 200 seconds.

When the drying temperature is less than 150°C, there is a problem that the moisture content of the raw cord cannot be sufficiently reduced, resulting in a decrease in elastic modulus. When the drying temperature exceeds 240°C, excessive heat treatment causes problems such as deteriorating the physical properties of the produced cord, such as strength or breaking elongation, or reducing marketability due to changes in color.

In addition, when the drying time is less than 100 seconds, the effect of reducing moisture content is not sufficient, and when the drying time exceeds 300 seconds, there is a problem that the physical properties of the cord, such as strength or breaking elongation, deteriorate.

Therefore, it is important to set the moisture content in the dried raw cord to 0.5% to 3.5% by drying the nylon raw cord as described above. When the moisture content in the raw cord is less than 0.5%, the high elastic modulus effect that can be achieved by reducing the moisture content is not achieved, and the cord is damaged by excessive heat and heat treatment time, causing a problem in which the physical properties of a final produced tire cord deteriorate. In addition, when the moisture content exceeds 3.5%, there is a problem that the effect of improving the elastic modulus is not achieved because the moisture content is not sufficiently reduced.

Thereafter, the nylon raw cord (dried raw cord) is immersed in the dipping solution and then dried and heat-treated to produce a dip cord. Typically, a "raw cord" is woven using a weaving machine, and the obtained fabric is immersed in a dipping solution and hardened to form a "dip cord" for tire cords with a resin layer attached to the surface of the "raw cord". That is, a dip cord for tire cords with a resin layer attached to the surface of the raw cord is produced. The process of immersing (dipping) in the dipping solution is generally called a dipping process. Dipping means impregnating the surface of fiber with a resin layer called resorcinol-formaline-latex (RFL). Through the dipping process, adhesion between tire cord fiber and rubber can be provided.

For normal nylon fibers, one-bath dipping is usually performed, but two-bath dipping may also be performed.

A dipping solution for adhesion of a cord and rubber may be generally prepared by reacting a solution containing resorcinol, formalin, sodium hydroxide, and the like, adding latex to it, and aging it.

After the cord is dried, the dipping solution (adhesive solution) is applied. In order to control the adhesion amount of dipping solution, a stretch ratio of 0% to 3% is required, and a stretch ratio of 1% to 2% is preferably performed. When the stretch ratio is too high, the adhesion amount of dipping solution may be adjusted, but the breaking elongation is reduced, resulting in reduced fatigue resistance. On the other hand, when the stretch ratio is too low, for example, lowered to less than 0%, the dipping solution may penetrate into the cord and the physical properties of the cord may deteriorate.

The adhesion amount of the dipping solution is preferably 4% to 6% of the weight of fiber on the basis of solid content. After passing through the dipping solution, the dip cord is dried at 120°C to 150°C. The dip cord is dried for 180 to 220 seconds. During the drying process, it is advantageous to dry the dip cord while it is stretched by 1% to 2%. When the stretch ratio is low, the intermediate elongation and breaking elongation of the cord increase, resulting in physical properties that are difficult to apply to tire cords. On the other hand, when the stretch ratio exceeds 3%, the intermediate elongation is appropriate, but the breaking elongation may become too small, resulting in reduced fatigue resistance.

After drying, heat treatment is performed at a temperature of 130°C to 240°C. During heat treatment, the stretch ratio is maintained at -1% to 0%, and the heat treatment time is appropriately 50 to 90 seconds.

As described above, by controlling the moisture content of the raw cord to a low level on the basis of the entire raw cord through the process of drying the raw cord, the load at specified elongation (LASE) can be increased and the shrinkage rate of the cord can be reduced, resulting in an increase in the elastic modulus of the nylon tire cord. Specifically, the nylon tire cord may have a load at 2% elongation (LASE 2%) of equal to or greater than 0.6 g/d, a load at 4% elongation (LASE 4%) of equal to or greater than 1.0 g/d, and a shrinkage rate of equal to or less than 6%, in which the shrinkage rate is measured under a primary load of 0.05 g/d at 177°C for 2 minutes. In addition, it is preferable that the nylon tire cord according to the present disclosure has a load at 2% elongation (LASE 2%) of 0.6 to 1.2 g/d, a load at 4% elongation (LASE 4%) of 1.0 to 2.0 g/d, and a shrinkage rate of 2% to 6%.

The nylon cord produced as described above makes it possible to produce a nylon tire cord with a high elastic modulus without increasing the draw ratio of yarn or applying high temperature and stretch conditions during cord production as in the related art, and exhibits the effect of maintaining the same level as conventional ones without deteriorating tensile properties such as strength and breaking elongation, while satisfying the physical properties of high elastic modulus.

Hereinafter, the present disclosure will be described in detail through examples as follows. However, the following examples are merely illustrative of the present disclosure, and the scope of the present disclosure is not limited thereto.

### [Example 1]

A polyhexamethylene adipamide chip with a relative viscosity (RV) of 3.4, prepared by condensation polymerization of hexamethylenediamine and adipic acid, was melt-spun at a temperature of 296°C using an extruder. Thereafter, a discharged yarn is solidified by passing through a cooling zone having a length of 600 mm, and then oiled with a spinning oil. After that, an undrawn yarn underwent two-step drawing and winding to produce a 420 denier nylon yarn. Here, the draw ratio was 4.8.

Thereafter, the two produced yarns were primarily and secondarily twisted at 420 TPM to produce a raw cord.

The produced raw cord underwent a drying process by heat treatment at 240°C for 100 seconds. Here, it was confirmed that the moisture content of the raw cord was 0.5% on the basis of the entire raw cord.

Thereafter, the raw cord that has undergone the drying process was woven, and the woven raw cord was dipped in a dipping solution containing RFL. Lastly, it was dried at 130°C for 180 seconds at a stretch ratio of 1%, and heat-treated at 150°C for 50 seconds at a stretch ratio of 0% to produce a nylon cord (dip cord).

### [Examples 2 and 3]

Nylon cords were produced in the same manner as in Example 1, except that the drying conditions and moisture content of a raw cord were adjusted as illustrated in Table 1 below.

### [Comparative Example 1]

A nylon cord was produced in the same manner as in Example 1, except that the process of drying a raw cord was not performed.

### [Comparative Examples 2 and 3]

Nylon cords were produced in the same manner as in Example 1, except that the drying conditions and moisture content of a raw cord were adjusted as illustrated in Table 1 below.

### [Experimental Example]

The moisture content of the raw cords and the physical properties of the dip cords prepared in Examples 1 to 3 and Comparative Examples 1 to 3 were evaluated by the following methods, and the results are illustrated in Table 1 below.

### 1) Moisture content of raw cord (on the basis of the entire raw cord)

To measure the moisture content of the raw cord, a hot air circulation oven equipped with an automatic temperature device was used. The raw cord was dried at an oven temperature of 125 **±** 3°C for 30 **±** 0.5 minutes, placed in a desiccator, cooled for 15 minutes, and then weighed. The moisture content was calculated by the equation below. Moisture content (%) = (weight before drying - weight after drying) / weight after drying x 100

### 2) Strength ratio and breaking elongation of dip cord

After allowing to stand in a constant temperature and humidity room under standard conditions, that is, a temperature of 25°C and a relative humidity of 65% RH, for 24 hours, the strength and breaking elongation of each sample was measured using a tensile tester in accordance with the ASTM D-885 test method.

### 3) Load at specified elongation (LASE) of a dip cord

The load at specified elongation (2%, 4%) was obtained from the elongation load curve obtained by the JIS L1O17 measurement method. The LASE of each sample was measured after allowing to stand under atmospheric conditions of 20°C and 65% RH for 24 hours.

Specifically, the LASE (g/d, 2%) was calculated by dividing the load value at 2% elongation by denier, and the LASE (g/d, 4%) was calculated by dividing the load value at 4% elongation by denier.

### 4) Shrinkage rate of dip cord

The shrinkage rate was measured after exposing each sample to 177°C under pretension with a primary load of 0.05 g/d for 2 minutes. A Testrite shrinkage rate tester was used as measurement equipment. Specifically, the shrinkage rate of the dip cord was automatically measured by the Testrite shrinkage rate tester. A cord sample to which a primary load of 0.05 g/d was applied was placed in a chamber heated to 177°C, and the shrinkage rate was automatically displayed through a display window after 2 minutes.

**[Table 1]**

| | | Example 1 | Example 2 | Example 3 | Comparative Example 1 | Comparative Example 2 | Comparative Example 3 |
|---|---|---|---|---|---|---|---|
| Raw cord drying | Drying temperature (°C) | 240 | 200 | 160 | X | 100 | 300 |
| | Drying time (sec) | 100 | 150 | 200 | X | 200 | 100 |
| Raw cord | Moisture content (%) | 0.5 | 1.5 | 3.5 | 4.0 | 3.8 | 0.4 |
| Dip cord | Strength (kg) | 7.6 | 7.5 | 7.5 | 7.5 | 7.4 | 6.6 |
| | LASE(g/d,2%) | 1.1 | 0.8 | 0.6 | 0.5 | 0.5 | 0.4 |
| | LASE(g/d,4%) | 1.7 | 1.3 | 1.1 | 0.9 | 0.9 | 0.7 |
| | Breaking elongation (%) | 17.1 | 17.4 | 17.5 | 17.7 | 18.0 | 15.6 |
| | Shrinkage rate (%) | 5.9 | 5.3 | 5.1 | 6.1 | 6.1 | 5.0 |
| | Twist number (TPM) | 420 | 420 | 420 | 420 | 420 | 420 |
| Heat treatment temperature in dipping process (°C) | | 150 | 150 | 150 | 150 | 150 | 150 |

Referring to Table 1, for the nylon cord produced according to examples 1-3, the moisture content of the raw cord was set to the optimal range by performing the drying process under the optimal drying temperature and drying maintenance time after forming the raw cord. As a result, compared to Comparative Example 1 in which the drying process was not performed, the strength and breaking elongation of the dip cord were maintained at the same level, while the LASE value was higher and the shrinkage rate was lower. Meanwhile, in the case of Comparative Example 2 in which the raw cord underwent the drying process, but the drying temperature was set lower than the range used in the present disclosure, the LASE value of the dip cord became higher due to the high moisture content in the raw cord, and the physical properties were at the same level as those of Comparative Example 1 in which the drying process was performed, resulting in a problem of reduced shrinkage rate. Meanwhile, in the case of Comparative Example 3, in which the drying temperature was set excessively high, as drying was performed at a temperature higher than the melting point of the nylon cord, carbonization occurred in fiber, resulting in a problem of deteriorating the physical properties of the cord.

In summary, it can be found that the nylon cord produced according to examples 1-3 exhibits excellent tensile properties and excellent desired elastic modulus without changing the draw ratio or process such as increasing the heat treatment temperature during cord production as in the related art by controlling the moisture content of the raw cord.

Although the preferred embodiment of the present disclosure has been disclosed for illustrative purposes, those skilled in the art will appreciate that various modifications, additions, and substitutions are possible, without departing from the scope and spirit of the present disclosure as disclosed in the accompanying claims. Therefore, the scope of the present disclosure should be determined on the basis of the descriptions in the appended claims, not any specific embodiment, and all equivalents thereof should belong to the scope of the present disclosure.

### Industrial Applicability

The present disclosure is an optimal disclosure that can adjust the moisture content of a raw cord through a process of drying a nylon raw cord, thereby increasing the elastic modulus of a final produced tire cord.

## Claims

1. A nylon cord, which has a load at 2% elongation (LASE 2%) of equal to or greater than 0.6 g/d, a load at 4% elongation (LASE 4%) of equal to or greater than 1.0 g/d, and a shrinkage rate of equal to or less than 6%, wherein the shrinkage rate is measured under a primary load of 0.05 g/d at 177°C for 2 minutes.

2. The nylon cord of claim 1, wherein the nylon cord has a load at 2% elongation (LASE 2%) of 0.6 to 1.2 g/d and a load at 4% elongation (LASE 4%) of 1.0 to 2.0 g/d.

3. The nylon cord of claim 1, wherein the nylon cord has a moisture content of 0.5% to 3.5% on the basis of the entire raw cord before dipping in a dipping solution.

4. A method for producing a nylon cord, the method comprising:
producing an undrawn yarn by melt-spinning and cooling a polyamide polymer prepared by condensation polymerization of hexamethylenediamine and adipic acid;
producing a nylon yarn by multistep drawing the undrawn yarn by passing the undrawn yarn through n godet rollers (n=3 or more) and winding the undrawn yarn;
producing a raw cord by primarily and secondarily twisting the nylon yarn at 100 to 550 TPM;
drying the raw cord; and producing a dip cord by dipping the dried raw cord in a dipping solution and then drying and heat-treating the raw cord,
wherein the drying of the raw cord is performed by drying the raw cord at a temperature of equal to or greater than 150°C for equal to or greater than 100 seconds.

5. The method of claim 4, wherein the drying of the raw cord is performed at 150°C to 240°C for 100 to 300 seconds.

6. The method of claim 4, wherein the dried raw cord has a moisture content of 0.5% to 3.5%.
